**Europäisches Patentamt**

(19) **European Patent Office**

**Office européen des brevets**

(11) Publication number: **0 306 304 B1**

(12) **EUROPEAN PATENT SPECIFICATION**

(45) Date of publication of patent specification :
08.01.92 Bulletin 92/02

(51) Int. Cl.⁵ : **F16G 5/16**

(21) Application number : **88308090.5**

(22) Date of filing : **01.09.88**

(54) **Belt for high load transmission.**

(30) Priority : **01.09.87 JP 133862/87**

(43) Date of publication of application :
**08.03.89 Bulletin 89/10**

(45) Publication of the grant of the patent :
**08.01.92 Bulletin 92/02**

(84) Designated Contracting States :
**DE GB**

(56) References cited :
EP-A- 0 135 710
EP-A- 0 188 854
EP-A- 0 240 912
EP-A- 0 240 936
DE-C- 850 539
FR-A- 1 137 003
FR-A- 1 215 244
US-A- 2 638 007
US-A- 4 610 648
PATENT ABSTRACTS OF JAPAN, vol. 8, no.
238 (M-335)[1675], 31st October 1984; & JP-
A-59 117 937 (MITSUBOSHI BELT K.K.) 07-
07-1984

(73) Proprietor : **MITSUBOSHI BELTING LTD.**
**No. 1-21, 4-Chome, Hamazoe-dori**
**Nagata-ku Kobe City Hyogo, pref. (JP)**

(72) Inventor : **Masuda, Takashi**
**No. 7-2, 3-chome Sakuragaoka Nishimachi**
**Nishi-ku Kobe (JP)**
Inventor : **Hashimoto, Kengiro**
**No. 17-5, 1-chome Higashiooike**
**Kita-ku Kobe (JP)**
Inventor : **Takagi, Shinichi**
**No. 5-3-305, Kanbara**
**Nishinoiya-shi Hyogo (JP)**
Inventor : **Tanaka, Masayuji**
**No. 17-2, 3-chome Yokoo**
**Suma-ku Kobe (JP)**

(74) Representative : **Bond, Bentley George et al**
**HASELTINE LAKE & CO. Hazlitt House 28**
**Southampton Buildings Chancery Lane**
**London, WC2A 1AT (GB)**

## Description

### Technical Field

This invention relates to power transmission belts and in particular to power transmission belts adapted for carrying high loads.

### Background Art

In EP-A-0188854, a power transmission belt is disclosed having an elastomeric looped flat belt portion provided with a longitudinally extending tensile cord. A plurality of longitudinally spaced blocks are provided in aligned pairs on the outer and inner surfaces of the flat belt portion. The blocks are secured to the belt by bolts extending through the blocks and belt.

Such blocks are conventionally formed by winding fabric impregnated with a setting material, such as synthetic resin or rubber. Such blocks are made to be relatively hard and are provided with short fibers. One excellent form of known block utilizes glass fibers which provide excellent strength, high bending elasticity, compression resistance and wear resistance. Further, the glass fibers increase the frictional coefficient of the block against the belt surface so as to permit utilizing the friction between the block and the belt to resist shearing of the block from the belt when shearing forces are applied thereto, such as when the belt is used to transmit heavy loads with low belt tension.

One common form of such belt drive, however, is one utilizing speed shifting pulleys wherein the belt moves radially outwardly or inwardly about the pulley in effecting the desired speed change. Because of the relatively high friction of the fiberglass belt, however, resistance to smooth movement of the belt inwardly and outwardly between the two confronting faces of the pulley halves prevents a smooth transition in the speed change.

One attempted solution to this problem has been to mix oil $MoS_2$ or graphite in the block material to reduce the coefficient of friction. Where oil has been used, it has been found that the volatile oil tends to leach out of the rubber during continued use, whereby the belt again has undesirable high friction characteristics.

In one form of known belt, the blocks are provided with recesses receiving outwardly extending projections on the belt for improved resistance to shear from the high loads applied thereto. It has been conventional to cause the recesses to accurately conform to the projections. As there is a tendency for the block portion engaging the neutral, or flat, belt portion at the sides of the projections to wear, the frictional engagement of the blocks with the flat belt portion thereat becomes reduced, thereby weakening the frictional retention force and thereby weakening the belt structure against shear forces applied to the blocks by high loads.

### Disclosure of Invention

The present invention comprehends an improved power transmission belt adapted for transmitting high loads with improved resistance to shear of the blocks relative to the neutral flat belt portion, while yet permitting smooth movement of the belt radially inwardly outwardly in variable speed pulleys in the operation thereof.

In one form, the invention comprehends a power transmission belt including an elastomeric neutral belt defining an outer flat surface and an inner flat surface, a tensile cord extending longitudinally in the neutral belt, a plurality of pairs of aligned longitudinally, equally spaced first and second blocks adjacent the outer and inner surfaces respectively of the neutral belt, and securing means extending through the neutral belt and the aligned blocks for removably securing said aligned blocks to the outer and inner surfaces, the neutral belt surfaces defining longitudinal spaced outer and inner aligned projections, the blocks being provided with a recess receiving the projections and having a depth less than the height of the projections, the securing means comprising means for causing the blocks to be compressed against the neutral belt into clamped frictional engagement with the belt flat surfaces.

In one form of the invention, the projections and recesses are trapezoidal, and in a modified form, the projections and recesses are rounded in cross section.

In the illustrated embodiment, the blocks are trapezoidal in cross section.

The securing means, in the illustrated embodiment, comprise elongated elements having resiliently turned ends clampedly engaging the outer surface of the block for resiliently urging the legs of the block against the neutral belt projection.

The invention further comprehends the provision of a power transmission belt for transmitting high loads, including an elastomeric neutral belt defining an outer flat surface and an inner flat surface, a tensile cord extending longitudinally in the neutral belt, a plurality of pairs of aligned longitudinally, equally spaced first and second blocks adjacent the outer and inner surfaces respectively of the neutral belt, and securing means extending through the neutral belt and the aligned blocks for removably securing said aligned blocks to the outer and inner surfaces, the blocks having an outer portion comprising thermoset synthetic resin material having friction-reducing fibers distributed therein.

In one form, the blocks comprise molded blocks of wound synthetic resin-coated fabric.

The fabric may comprise a cloth, a cord fabric, a nonwoven fabric, etc.

In the illustrated embodiment, at least one yarn of the fabric is formed of a material selected from the group consisting of carbon fiber, aramid fiber and silicon carbon fiber.

The invention further comprehends the provision of a power transmission belt for transmitting high loads including an elastomeric neutral belt defining an outer flat surface and an inner flat surface, a tensile cord extending longitudinally in the neutral belt, a plurality of pairs of aligned longitudinally, equally spaced first and second blocks adjacent the outer and inner surfaces respectively of the neutral belt, and securing means extending through the neutral belt and the aligned blocks for removably securing said aligned blocks to the outer and inner surfaces, the neutral belt surfaces defining longitudinal spaced outer and inner aligned projections, the blocks being provided with a recess receiving the projections and having a depth less than the height of the projections, the securing means comprising means for causing the blocks to be compressed against the neutral belt into clamped frictional engagement with the belt flat surfaces, said blocks comprising a core and a U-shaped outer wall portion extending about said core, said outer wall portion defining the recess of the block.

In one form of the invention, the outer wall portion comprises an aramid fiber reinforced synthetic resin material. In another form, the outer wall portion comprises a carbon fiber reinforced synthetic resin material.

The outer wall portion may be formed of a synthetic resin-coated fabric molded about the core.

In one embodiment, one of the core and the outer wall portion is formed of a carbon fiber reinforced synthetic resin material and the other of the core and outer wall portion comprises an aramid fiber reinforced synthetic resin material.

The invention comprehends alternatively that at least one of the core and outer wall portions comprise a silicon carbide fiber reinforced synthetic resin material.

The invention further comprehends the provision of a power transmission belt for transmitting high loads including an elastomeric neutral belt defining an outer flat surface and an inner flat surface, a tensile cord extending longitudinally in the neutral belt, a plurality of pairs of aligned longitudinally, equally spaced first and second blocks adjacent the outer and inner surfaces respectively of the neutral belt, and securing means extending through the neutral belt and the aligned blocks for removably securing said aligned blocks to the outer and inner surfaces, the neutral belt surfaces defining longitudinal spaced outer and inner aligned projections, the blocks being provided with a recess receiving the projections and having a depth less than the height of the projections, the securing means comprising means for causing the blocks to be compressed against the neutral belt into clamped frictional engagement with the belt flat surfaces, the blocks comprising one-piece molded synthetic resin elements having friction-reducing fibers distributed therein.

The invention comprehends that the friction-reducing fibers comprise one or more fibers taken from the group consisting of carbon fibers, aramid fibers, and silicon carbide fibers.

The invention comprehends that the blocks have metal foil distributed therein for dissipating heat in the blocks.

The invention comprehends that the fibers be provided in the form of fabric.

The fabric may be provided in a plurality of layers of different fabrics.

The power transmission belt of the present invention is extremely simple and economical of construction, while yet providing highly improved adjustable speed functioning under high loads.

## Brief Description of the Drawing

Other features and advantages of the invention will be apparent from the following description taken in connection with the accompanying drawing wherein :

FIGURE 1 is a longitudinal section of a power transmission belt embodying the invention ;

FIGURE 2 is an exploded view showing dimensional relationships between the projections and recesses of the neutral belt and blocks, respectively ;

FIGURE 3 is a cross section of a block embodying the invention having a core formed of an aramid fiber synthetic resin and an outer wall portion formed of a carbon fiber reinforced synthetic resin ;

FIGURE 4 is a cross section of a block embodying the invention wherein the core is formed of carbon fiber reinforced synthetic resin and the outer wall portion is formed of an aramid fiber reinforced synthetic resin;

FIGURE 5 is a cross section of a block embodying the invention made up of spirally wound fabrics made of aramid fiber reinforced synthetic resin and carbon fiber reinforced synthetic resin ;

FIGURE 6 is a cross section of a block embodying the invention comprising a monolithic block of carbon fiber reinforced synthetic resin ;

FIGURE 7 is a cross section of a block embodying the invention comprising a monolithic block of aramid fiber reinforced synthetic resin ;

FIGURE 8 is a cross section of a block embodying the invention comprising a monolithic block formed of a cloth of aramid fiber and carbon fiber reinforced synthetic resin ;

FIGURE 9 is a cross section of a block embodying the invention having a core portion comprising a wound fabric of an aramid fiber reinforced synthetic resin, and an outer portion of a carbon fiber reinforced synthetic resin ;

FIGURE 10 is a cross section of a block embodying the invention similar to that of Figure 9, but wherein the core is laminated ;

FIGURE 11 is a diametric section of a rivet adapted to form the securing means of the blocks ;

FIGURE 12 is a transverse cross section illustrating the use of a pair of securing elements at opposite sides of the belt and securing the blocks to the neutral belt portion ; and

FIGURE 13 is a view similar to that of Figure 2, but illustrating a modified form of the invention wherein the projections and recesses are rounded.

## Best Mode for Carrying Out the Invention

In the illustrative embodiment of the invention as disclosed in the drawing, a power transmission belt generally designated 10 is shown to comprise a neutral belt 11 having longitudinally extending tensile cords 12 formed of a high strength synthetic resin. Neutral belt 11 may be formed of a suitable flexible material, such as rubber.

The neutral belt is provided at longitudinally spaced intervals with oppositely outwardly projecting projections 13 and 14. Intermediate the projections, the neutral belt defines an outer flat surface 15 and an inner flat surface 16.

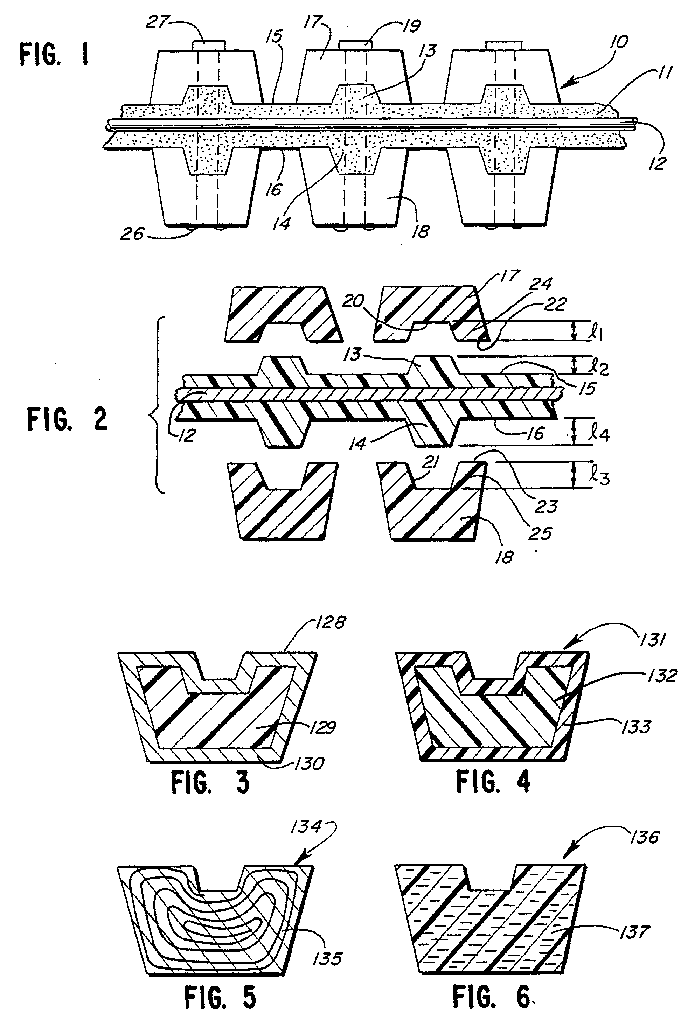

Complementary pairs of blocks 17 and 18 are secured to the neutral belt 11 against the outer surface 15 and inner surface 16, respectively, by securing, or retaining, elements 19. As seen in Figure 1, the retaining elements may comprise rivets extending through the blocks and projections.

As seen in Figure 2, blocks 17 define trapezoidal recesses 20 and blocks 18 define trapezoidal recesses 21.

Projections 13 and 14 are generally similar in cross section to recesses 20 and 21, respectively. However, the legs of the blocks have a length slightly greater than the height of the projections, whereby the securing elements 19 compressively urge the distal surfaces 22 and 23 of the blocks 17 and 18, respectively, forcibly against the flat surfaces 15 and 16 of the neutral belt to provide a high friction engagement therebetween. As shown in Figure 2, the depth of the recesses 20, or length of the legs 24 $\ell_1$ is greater than the height of the projections 13 $\ell_2$, and the depth of the recesses 21 or legs 25 $\ell_3$ is greater than the height of the projections 14 $\ell_4$.

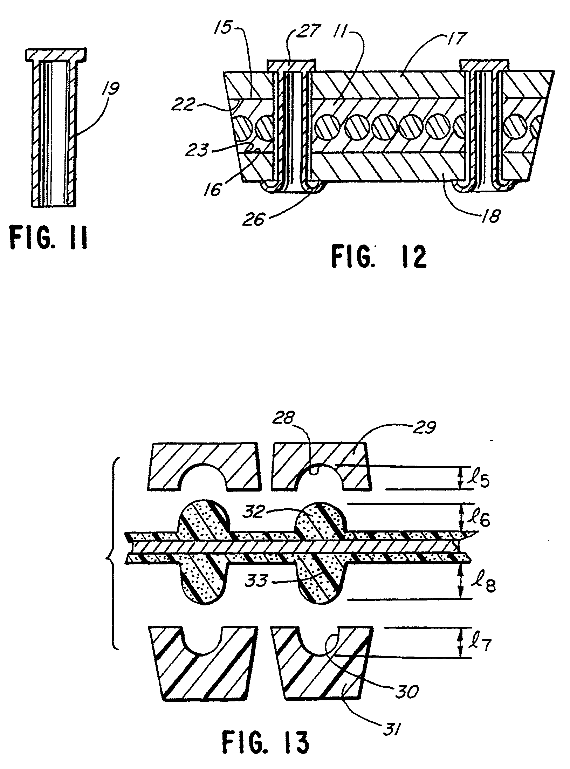

As seen in Figure 12, the securing elements may comprise rivets 19. The distal end 26 of the rivets may be turned to engage the outer surface of the blocks and forcibly compress the blocks against the neutral belt, with the leg surfaces 22 and 23 of the blocks tightly frictionally engaging the belt surfaces 15 and 16.

As shown, the rivets are provided with conventional heads 27 engaging the outer surface of the blocks 17.

As shown in Figure 12, a pair of such securing means rivets may be utilized in securing each of the blocks to the belt being disposed in transversely spaced relationship.

As the thickness of the neutral belt outwardly from the tensile cords is relatively small, the compressive force of the legs acting against the flat surface of the neutral belt is transmitted to the tensile cords, thereby further stabilizing and strengthening the mounting of the blocks to the neutral belt.

As illustrated in Figure 13, the projections and recesses of the neutral belt and blocks, respectively, may be rounded in lieu of the trapezoidal configuration of the embodiment of Figures 1 and 2. Thus, as seen in Figure 13, the recesses 28 of the blocks 29 and recesses 30 of the blocks 31 may comprise right circularly cylindrical recesses and the projections 32 and 33 are complementarily right circularly cylindrical. As in the embodiment of Figures 1 and 2, the recesses 28 may have a depth $\ell_5$ which is greater than the height $\ell_6$ of the projections 32 and the recesses 30 may have a depth $\ell_7$ which is greater than the height $\ell_8$ of the projections.

The cylindrical configuration of the recesses and projections provides an improved increased facial engagement between the blocks and projections.

The blocks are formed of a relatively hard material, such as hard rubber, having 85° or higher hardness, synthetic resins, such as phenol, epoxy, nylon, polyester, acrylic, methacrylic, polyamide, etc. resins. The resins may be reinforced by distributing therein short fibers, such as cotton yarn fibers, chemical fibers, glass fibers, metallic fibers, etc. Alternatively, the block material may be reinforced with cloths, such as canvas, etc.

A number of different block constructions for use in practicing the invention are illustrated in Figures 3-10.

In one form, the block generally designated 128 comprises a core 129 and an outer wall portion 130. The core is formed of an aramid fiber reinforced synthetic resin and the outer wall portion 130 is formed of a carbon fiber reinforced synthetic resin wrapped about the core.

In Figure 4, a block 131 is formed of a core 132 formed of carbon fiber reinforced synthetic resin, and an outer wall portion 133 formed of an aramid fiber reinforced synthetic resin.

The embodiments of Figures 3 and 4 may be readily made by wrapping a resin impregnated fabric about the preformed core, which may be, for example, U-shaped, and completing the molding of the block in a suitable compression mold.

In Figure 5, a further modified form of block 134 is shown to comprise a block wherein a laminated pair of aramid fiber reinforced synthetic resin fabric material and carbon fiber reinforced synthetic resin fabric material is spirally wound and then molded as a monolithic block having a spiral wrapped laminate 135 embedded therein.

A further modified form of block embodying the invention is shown in Figure 6 to comprise a block 136 formed of a carbon fiber reinforced synthetic resin wherein short carbon fibers 137 are uniformly distributed in the resin.

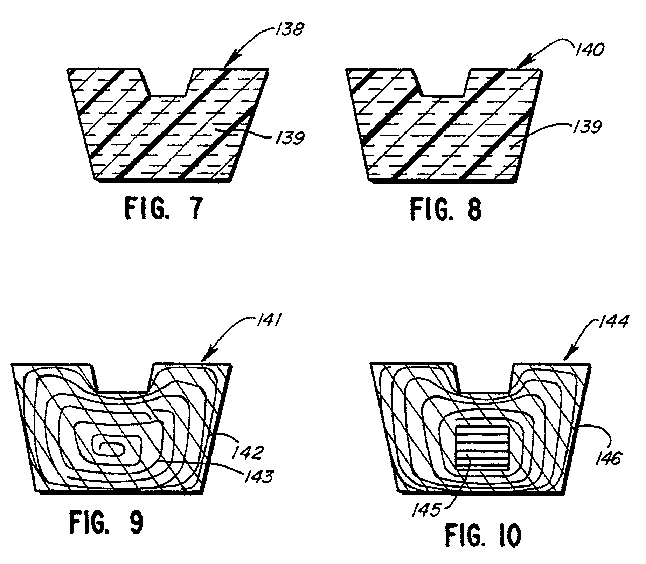

In Figure 7, another form of block embodying the invention generally designated 138 is shown wherein short aramid fibers 139 are embedded in the synthetic resin.

In Figure 8, another form of block embodying the invention generally designated 140 is shown wherein short carbon fibers 137 and short aramid fibers 139 are embedded in the synthetic resin.

Referring now to Figure 9, a block embodying the invention generally designated 141 is formed by wrapping a carbon fiber reinforced synthetic resin fabric 142 about an aramid fiber reinforced synthetic resin fabric 143 wound as a core, with the thusly wrapped fabrics molded under compression to form the block as seen in Figure 9.

In Figure 10, another modified form of block embodying the invention comprises a block 144 similar to block 141 but wherein the core 145 is formed by superimposed layers of the core fabric. The core fabric may comprise an aramid fiber reinforced synthetic resin fabric, and the outer fabric may comprise a carbon fiber synthetic resin fabric 146.

As will be obvious to those skilled in the art, silicon carbide fiber may be substituted for either of the carbon fiber or aramid fiber of the embodiments described above. Alternatively, all three of the different types of fibers may be used in the blocks.

To provide for heat dissipation, aluminum foil may be wound into the block construction.

The use of the fibers in the different embodiments discussed above provides blocks which have a reduced frictional coefficient for improved speed shifting operation. By virtue of the clamping of the blocks forcibly against the neutral belt flat surfaces, a maintained high frictional engagement of the block distal leg surfaces with the neutral belt surfaces is obtained, and the clamping action of the two blocks is transmitted to the tensile cord to provide a further improved, stable, shear-resistant association of the blocks with the neutral belt.

As the neutral belt is formed of a more resilient material than the blocks, the compression of the neutral belt between the blocks provides a high friction, high strength connection therebetween. In the illustrated embodiment, the amount of compression of the neutral belt is preferably in the range of approximately 2% to 20%, as determined by the formula $\ell 2 - \ell 1/\ell 2 \times 100$, or $\ell 4 - \ell 3/\ell 4 \times 100$.

Where the hardness of the neutral belt is in the range of approximately 75° to 85°, the maximum compression is preferably somewhat lower and, thus, in the range of approximately 2% to 15%.

While the securing means has been described as a rivet 19, as will be obvious to those skilled in the art, bolts and other suitable securing elements may be utilized in lieu thereof within the broad scope of the invention. The use of the rivet is preferred in that the turned ends 26 act as springy members providing a resilient clamping force of the blocks against the neutral belt. Further, where wear of the belt may occur, a tightening of the securing means may be readily effected by simple further upsetting of the turned ends.

Where the blocks are formed by utilizing fibers in the form of wound fabric, sufficient synthetic resin is provided on the fabrics to provide a monolithic body in the final molded block, with the fabric molded thereinto. The fabric may be coated with the synthetic resin in the conventional manner. In the illustrated embodiment, the synthetic resins are preferably thermoset resins providing a hard, molded block construction having long, troublefree life. The fibers may be used as sole yarns, combined yarns, or combined and twisted yarns, and may be provided in the form of cord fabrics, cloth, nonwoven fabrics. One highly advantageous fabric has been found to be canvas. The power transmission belts utilizing the blocks of the invention have been found to have improved long, troublefree life, with reduced wear of the blocks and providing smooth speed change operations. A comparison of power transmission belts utilizing blocks of the invention with that of the conventional block utilizing glass cloth is set out in the following Table 1.

TABLE 1

| | Resin | Reinforcing resin | Structure | Bending elasticity $kg/mm^2$ | Compression strength $kg/mm^2$ | Wear amount cc/hr | Frictional coefficient |
|---|---|---|---|---|---|---|---|
| Comparison Example | epoxy | glass fabric | spiral | 2040 | 30 | 4.6 | 0.4 |
| Example 1 | epoxy | carbon fabric | spiral | 2600 | 41 | 2.1 | 0.14 |
| Example 2 | epoxy | aramid cord | spiral | 1500 | 18 | 1.5 | 0.18 |
| Example 3 | epoxy | carbon/aramid | wrapping-hollow | 2000 | 28 | 1.8 | 0.16 |
| Example 4 | imide | carbon/aramid | wrapping-hollow | 2300 | 30 | 1.6 | 0.17 |

EP 0 306 304 B1

For very high loads, it is preferable to use a high percentage or all carbon fibers in the block construction. A durability test was run with the examples of Table 1, wherein the torque transmitted was 18 kg-m, and the speed shifting ratio was set to 5. The results of this test are set out in the following Table 2.

| | Durability time (hrs.) |
|---|---|
| Comparison example | Impossible to test due to no speed shift |
| Example 1 | 530 |
| Example 2 | 120 |
| Example 3 | 420 |
| Example 4 | 470 |

The foregoing disclosure of specific embodiments is illustrative of the broad inventive concepts comprehended by the invention.

**Claims**

1. A power transmission belt (10) for transmitting high loads, said belt (10) comprising :
an elastomeric neutral belt (11) defining an outer flat surface (15) and an inner flat surface (16) ;
a tensile cord (12) extending longitudinally in said neutral belt (11) ;
a plurality of pairs of aligned longitudinally, equally spaced first and second blocks (17, 18) adjacent said outer and inner surfaces (15, 16) respectively of said neutral belt (11) ; and
securing means (19) extending through said neutral belt (11) and the aligned blocks (17, 18) to said outer and inner surfaces (15, 16) ; characterised in that said neutral belt surfaces (15, 16) define longitudinal spaced outer and inner aligned projections (13, 14), in that each said block (17, 18) is provided with a recess (20, 21) receiving said projections (13, 14) and having a depth less than the height of said projections (13, 14), and in that said securing means (19) comprises means for causing said blocks (17, 18) to be compressed against said neutral belt (11) into clamped frictional engagement with said belt flat surfaces (15, 16).

2. A belt (10) according to claim 1 wherein said projections (13, 14) and recesses (20, 21) are trapezoidal in cross section.

3. A belt (10) according to claim 1 wherein said projections (13, 14) and recesses (20, 21) are rounded in cross section.

4. A belt (10) according to any of claims 1 to 3 wherein said securing means (19) comprises securing elements (19) extending one each through said aligned projections (13, 14) of the neutral belt (11) and the blocks (17, 18) secured thereto.

5. A belt (10) according to any of claims 1 to 4 wherein said blocks (17, 18) are trapezoidal in cross section.

6. A belt (10) according to claim 4 wherein said securing means (19) comprises elongated securing elements (19) extending one each through said aligned projections (13, 14) of the neutral belt (11) and the blocks (17, 18) secured thereto and having a resiliently turned end clampedly engaging the outer surface of the block (17, 18) for resiliently urging the block (17, 18) against the neutral belt projections (13, 14).

7. A belt (10) according to claim 6 wherein said elongated securing elements (19) comprises elongated rivets (19).

8. A belt (10) according to claim 6 or 7 wherein each block (17, 18) is secured to the neutral belt (11) by a pair of said securing elements (19) spaced apart transversely to the longitudinal extent of the neutral belt (11).

9. A belt (10) according to any of claims 1 to 8 wherein said blocks (17, 18) comprise a core (129, 132) and a U-shaped outer wall portion (130, 133) extending about said core (129, 132), said outer wall potion (130, 133) defining said recess (20, 21) of the block (17, 18).

10. A belt (10) according to any of claims 1 to 8 wherein said blocks (17, 18) comprise one-piece molded synthetic resin elements (136, 138, 140) having friction-reducing fibers (137, 139) distributed therein.

11. A belt (10) according to any of claims 1 to 8 wherein said blocks (17, 18) have an outer portion comprising thermoset synthetic resin material having friction-reducing fibers (137, 139) distributed therein.

**Patentansprüche**

1. Schwer belastbarer Treibriemen (10) mit

einem eine ebene Außenfläche (15) und eine ebene Innenfläche (16) bildenden elastomeren Neutralriemen (11),

einer sich in Längsrichtung des Neutralriemens (11) erstreckenden Zugschnur (12)

mehreren sich benachbart den Außenflächen bzw. den Innenflächen (15, 16) des Neutralriemens (11) in Längsrichtung mit gleichem Abstand voneinander erstreckenden Paaren von miteinander fluchtenden ersten und zweiten Blöcken (17, 18) und

sich durch den Neutralriemen (11) und die miteinander fluchtenden Blöcke (17, 18) bis zu den Außen- und Innenflächen (15, 16) erstreckenden Halterungsorganen (19), <u>dadurch gekennzeichnet</u>, daß die Flächen (15, 16) des Neutralriemens in Längsrichtung voneinander mit Abstand liegende und miteinander fluchtende äußere und innere Vorsprünge (13, 14) bilden, <u>daß</u> jeder Block (17, 18) eine die Vorsprünge (13, 14) aufnehmende Ausnehmung (20, 21) geringerer Tiefe als der Höhe der Vorspringe (13, 14) aufweist und <u>daß</u> die Halterungsorgane (19) Einrichtungen aufweisen, welche bewirken, daß die Blöcke (17, 18) in Richtung zum Neutralriemen (11) gedrückt und in reibschlüssigen Eingriff mit den ebenen Neutralriemenflächen (15, 16) geklemmt werden.

2. Riemen (10) nach Anspruch 1, worin die Vorsprünge (13, 14) und die Ausnehmungen (20, 21) einen trapezförmigen Querschnitt besitzen.

3. Riemen (10) nach Anspruch 1, worin die Vorsprünge (13, 14) und die Ausnehmungen (20, 21) einen abgerundeten Querschnitt besitzen.

4. Riemen (10) nach irgendeinem der Ansprüche 1 bis 3, worin die Halterungsorgane (19) Halterungselemente (19) aufweïsen, welche sich durch jeden der miteinander fluchtenden Vorsprünge (13, 14) des Neutralriemens (11) und die daran festgelegten Blöcke (17, 18) erstrecken.

5. Riemen (10) nach irgendeinem der Ansprüche 1 bis 4, worin die Blöcke (17, 18) trapezförmigen Querschnitt besitzen.

6. Riemen (10) nach Anspruch 4, worin das Halterungsorgan (19) sich durch jeden der miteinander fluchtenden Blöcke (13, 14) des Neutralriemens (11) und die daran festgelegten Blicke (17, 18) erstreckende langgestreckte Halterungselemente (19) aufweist, welche mit einem elastisch umgebördelten Ende die Außenfläche des Blockes (17, 18) klemmend erfassen, um den Block elastisch gegen die Vorsprünge (13, 14) des Neutralriemens zu drücken.

7. Riemen (10) nach Anspruch 6, worin die langgestreckten Halterungselemente (19) langgestreckte Niete (19) aufweisen.

8. Riemen (10) nach Anspruch 6 oder 7, worin jeder Block (17, 18) am Neutralriemel (11) durch ein Paar von Halterungs elementen (19) festgelegt ist, welche quer zur Längsrichtung des Neutralriemels (11) mit bestand voneinander liegen.

9. Riemen (10) nach irgendeinem der Ansprüche 1 bis 8, worin die Blöcke (17, 18) einen Kern (129, 132) und eilen U-förmigen und sich um den Kern (129, 132) erstreckenden Außenwaldabschnitt (130, 133) aufweiset, wobei der Außenwandabschitt (130, 133) die Ausnehmung (20, 21) des Blockes (17, 18) defiliert,

10. Riemen (10) nach irgendeinem der Ansprüche 1 bis 8, worin die Blöcke (17, 18) aus synthetischem Harz eilstückig geformte Elemente (136, 138, 140) aufweisen, in welchen reibungsvermindernde Fasen (137, 139) verteilt sind.

11. Riemen (10) nach irgendeinem der Ansprüche 1 bis 8, worin die Blöcke (17, 18) einen Außenabschnitt aus in der Wärme verfestigtem Kunstharz aufweisen, in welchem reibungsvermindernde Fasern (137, 139) verteilt sind.

**Revendications**

1. Courroie (10) de transmission d'énergie destinée à transmettre des forces élevées, la courroie (10) comprenant :

une courroie neutre élastomère (11) délimitant une surface externe plate (15) et une surface interne plate (16),

un câblé (12) de tension placé longitudinalement dans la courroie neutre (11),

plusieurs paires de premiers et seconds blocs (17, 18) régulièrement espacés et alignés longitudinalement, ces blocs étant adjacents aux surfaces externe et interne (15, 16) de la courroie neutre (11), et

un dispositif (19) de fixation disposé à travers la courroie neutre (11) et les blocs alignés (17, 18) jusqu'aux surfaces externe et interne (15, 16), caractérisée en ce que les surfaces (15, 16) de la courroie neutre délimitent des saillies externes et internes alignées (13, 14) distantes longitudinalement, en ce que chaque bloc (17, 18) a une cavité (20, 21) destinée à loger les saillies (13, 14) et ayant une profondeur inférieure à la hauteur des saillies (13, 14), et en ce que le dispositif de fixation (19) comprend un dispositif destiné à provoquer une compression des blocs (17, 18) contre la courroie neutre (11) en coopération par frottement, sous forme serrée, avec les surfaces plates (15, 16) de la courroie.

2. Courroie (10) selon la revendication 1, dans laquelle les saillies (13, 14) et les cavités (20, 21) ont une section de forme trapézoïdale.

3. Courroie (10) selon la revendication 1, dans laquelle les saillies (13, 14) et les cavités (20, 21) ont une section arrondie.

4. Courroie (10) selon l'une quelconque des revendications 1 à 3, dans laquelle le dispositif (19) de fixation (19) comprend des éléments de fixation (19) traversant chacun les saillies alignées (13, 14) de la courroie neutre (11) et les blocs (17, 18) qui lui sont fixés.

5. Courroie (10) selon l'une quelconque des revendications 1 à 4, dans laquelle les blocs (17, 18) ont une section de forme trapézoïdale.

6. Courroie (10) selon la revendication 4, dans laquelle le dispositif de fixation (19) comprend des éléments allongés (19) de fixation traversant chacun les saillies alignées (13, 14) de la courroie neutre (11) et les blocs (17, 18) qui lui sont fixés et ayant une extrémité repliée élastiquement gui coopère par serrage avec la surface externe du bloc (17, 18) afin que le bloc (17, 18) soit repoussé élastiquement contre les saillies (13, 14) de la courroie neutre.

7. Courroie (10) selon la revendication 6, dans laquelle les éléments allongés (19) de fixation sont des rivets allongés (19).

8. Courroie (10) selon la revendication 6 ou 7, dans laquelle chaque bloc (17, 18) est fixé à la courroie neutre (11) par deux éléments de fixation (19) espacés transversalement à la dimension longitudinale de la courroie neutre (11).

9. Courroie (10) selon l'une quelconque des revendications 1 à 8, dans laquelle les blocs (17, 18) comportent une âme (129, 132) et une partie de paroi externe (130, 133) en U disposée autour de l'âme (129, 132), la partie de paroi externe (130, 133) délimitant la cavité (20, 21) du bloc (17, 18).

10. Courroie (10) selon l'une quelconque des revendications 1 à 8, dans laquelle les blocs (17, 18) sont des éléments (136, 138, 140) de résine de synthèse moulés en une seule pièce et ayant des fibres (137, 139) de réduction de frottement qui sont réparties à l'intérieur.

11. Courroie (10) selon l'une quelconque des revendications 1 à 8, dans laquelle les blocs (17, 18) ont une partie externe comprenant un matériau à base d'une résine de synthèse thermodurcissable ayant des fibres (137, 139) de réduction de frottement qui sont réparties à l'intérieur.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13